# EUROPEAN PATENT SPECIFICATION

(11) **EP 4 521 515 B1**
(45) Date of publication and mention of the grant of the patent: **18.03.2026**
(21) Application number: 24198623.1
(22) Date of filing: 05.09.2024
(51) Int. Cl.: H01M 10/6554, H01M 10/6562, H01M 50/204, H01M 50/209, H01M 50/249, H01M 50/262, H01M 50/264, H01M 50/271

(54) **FIXING SYSTEM FOR A VEHICULAR BATTERY SYSTEM**
BEFESTIGUNGSSYSTEM FÜR EIN FAHRZEUGBATTERYSYSTEM
SYSTÈME DE FIXATION D'UN SYSTÈME DE BATTERIE D'UN VÉHICULE

(30) Priority: 07.09.2023 IT 202300018372
(43) Date of publication of application: 12.03.2025
(73) Proprietor: FPT Industrial S.p.A., 10156 Torino (IT)
(72) Inventor: SIMONETTI, Marco, 10156 TORINO (IT); MARIANI, Alessandro, 10156 TORINO (IT); MERRITT, Simon David, 10156 TORINO (IT)
(74) Representative: Studio Torta S.p.A.

(56) References cited:
- DE-A1- 102015 104 620
- US-A1- 2009 226 806
- US-A1- 2014 220 391
- US-A1- 2023 216 106
- US-B2- 7 947 389

## Description

### TECHNICAL FIELD

The invention relates to a fixing system, in particular a fixing system for vehicle batteries.

The invention preferably, though not exclusively applies to a vehicle battery pack. Hereinafter reference will be made to this application by mere way of example.

### KNOWN STATE OF THE ART

Vehicles have a tendency to become more and more electrified in order to reduce the emissions generated by the use of internal combustion engines or to replace them entirely.

Hybrid, electric or hydrogen vehicles are increasingly used for this purpose. These vehicles, as it is known, store electrical energy used for driving/operating the operating systems of the vehicle or stored by generating means in battery systems.

These battery systems comprise one or more battery units housed inside a casing that isolates them from the outside and allows the necessary wiring to be housed. Said one or more battery units are each fixed to the casing by means of respective brackets.

As it is also known, the electric batteries used in these vehicles are electrochemical storage devices, which, during use, while they are being charged and as the charge depletes, tend to heat up. It is possible for the inner heating of the batteries to reach levels that are such as to generate a phenomenon known as "thermal runaway", in which the temperature triggers exothermic reactions, which further increase the temperature, thus leading to possible disastrous consequences, such as explosions or fires.

Therefore, it is necessary to provide a fixing system that is stable and at the same time allows for a sufficient heat exchange in order to avoid overheating of the battery packs inside the casing.

Example of prior art arrangement are disclosed in patent publications DE102015104620 A1, US2014220391 A1, US2009226806 A1, US7947389 B or US2023216106 A1.

The object of the invention is to fulfil the needs discussed above in an optimized and economic fashion.

### SUMMARY OF THE INVENTION

The aforesaid object is reached by a fixing system and a battery pack as claimed in the appended claims that are an integral part of this description.

### BRIEF DESCRIPTION OF THE DRAWINGS

The invention will be best understood upon perusal of the following detailed description of a preferred embodiment, which is provided by way of non-limiting example, with reference to the accompanying drawings, wherein:

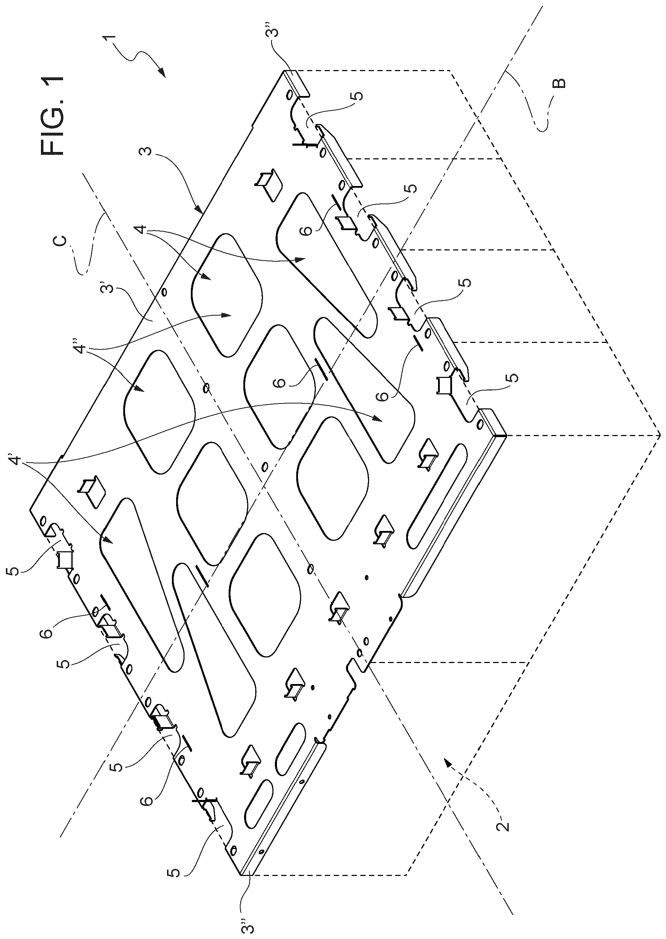

- Figure 1 is a perspective view of the fixing system according to the invention with parts removed for greater clarity; and
- Figure 2 is a further perspective view of the fixing system according to the invention with parts removed for greater clarity.

### DETAILED DESCRIPTION OF THE INVENTION

The accompanying figures show a fixing system 1 for batteries 2 according to the invention. In particular, the batteries 2 and, hence, the fixing system 1 are part of a battery pack of a vehicle (not shown) housed inside a casing that isolates the batteries 2, the fixing system 1 and other elements from the outside.

In particular, the fixing system 1 is configured to allow all the batteries 2 of the battery pack to be fixed to one another and, advantageously, to the casing of the battery pack, by means of connecting elements, such as threaded elements.

The fixing system 1 basically comprises a fixing element 3 configured to define a plurality of fixing points for the batteries 2 and, optionally, to allow the casing to be fixed and, if necessary, further electrical elements, such as electrical power management systems, such as inverters, to be fixed.

In detail, the fixing element 3 is manufactured as one single piece and is preferably made of a metal material.

In detail, the fixing element 3 comprises a flat wall 3' having a shape that is complementary to the shape defined by the casing of the battery pack and, in particular, in the embodiment described herein, a rectangular shape that develops along a longitudinal axis A and a transverse axis B that are perpendicular to one another.

In detail, the fixing element 3 further comprises a cantilevered portion 3'' extending along at least part of the perimeter of the flat wall 3' and extending perpendicular thereto, i.e. parallel to a vertical axis C perpendicular to the longitudinal and transverse axes A, B.

In the embodiment described herein, the cantilevered portion 3'' extends along part of the perimeter of the flat wall 3', in particular discontinuously on each side of the perimeter thereof.

Advantageously, the fixing element 3 defines a plurality of openings 4, 5 going through the flat wall 3'. In detail, the fixing element 3 defines first openings 4, which are spaced apart from the edges of the flat wall 3' and comprise a first plurality of openings 4' and a second plurality of openings 4".

Advantageously, the openings of the first plurality of openings 4' have the same shape and, preferably, the openings of the second plurality of openings 4" have the same shape.

Preferably, the first plurality of openings 4' are located externally with respect to the second plurality of openings 4" relative to the direction of the transverse axis B.

In detail, the openings of the first plurality of openings 4' have a triangular shape and comprise a first pair of triangular openings on each side with respect to the direction of the transverse axis B. Advantageously, each opening defines a right triangular shape, whose catheters are parallel to the edges of the flat wall 3' and whose hypotenuse faces that of the other opening.

Advantageously, the second plurality of openings 4" comprise a plurality of quadrangular openings, advantageously square-shaped openings with chamfered vertices, placed symmetrically with respect to one another relative to the longitudinal and transverse axes A, B. Advantageously, the second plurality of openings define six openings arranged in two columns, each with three rows of openings.

The second openings 5 are advantageously obtained along a pair of edges of the flat wall 3', advantageously on the edges parallel to the longitudinal axis A. The second openings 5 are as many as the number of batteries 2 connected by means of the fixing element 3 and advantageously have a quadrangular shape.

The fixing element 3 further defines a plurality of fixing points, made as through holes, which allow for the passage of fixing elements such as screws, rivets or equivalent elements in order to allow further electrical devices of the type defined above to be fixed.

An example of said fixing points is represented by longitudinal openings 6, whose purpose is described below.

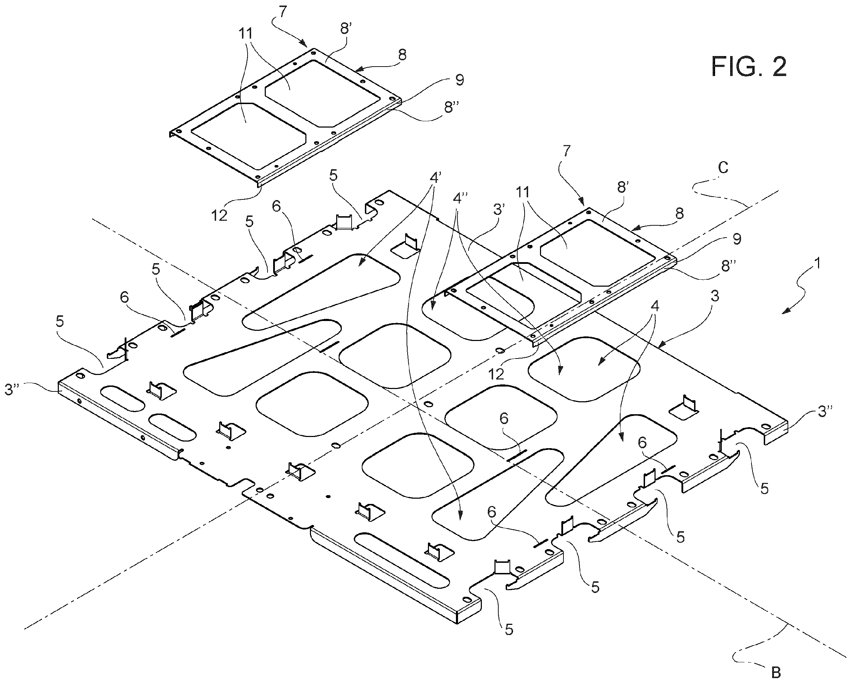

As shown in figure 2, the fixing system 1 can further comprise auxiliary elements 7, which are configured to be fixed to the fixing element 3 and are designed to support further electrical devices.

In detail, the fixing system 1 disclosed herein comprises a pair of auxiliary elements 7.

Advantageously, the auxiliary elements 7 have the same shape and basically comprise a support element 8 comprising a flat wall 8' and a flanged portion 8" extending along at least part of the perimeter of the flat wall 8'.

In the embodiment described herein, the support element 8 comprises a flanged portion 8" along the entire extension of a pair of edges, advantageously parallel to the longitudinal axis A, which are opposite one another.

The support element 8 also comprises anchoring elements 9 configured to allow the support element 8 to be coupled to the fixing element 3.

In detail, said anchoring elements 9 comprise a plurality of protuberances configured to be inserted into dedicated openings 6 made in the flat wall 3'. In detail, in the embodiment described herein, the protuberances are substantially flat indentations designed to be inserted into the openings 6 made as slits.

The flat wall 8' further defines a plurality of openings 11 configured to occupy the greatest part of the surface defined by the flat wall 8' itself. In detail, according to the embodiment described herein, there are two openings 11, which are symmetrically arranged with respect to one another relative to the transverse axis B and have a substantially rectangular shape, chamfered at the vertices.

In particular, when the support element 8 is connected to the fixing element 3, the openings 11 obtained on the support element 8 face the first plurality of openings 4'.

The use of the embodiment of the fixing system according to the invention described above is the following.

The battery pack 2 is placed on a bottom wall of the casing of the battery pack (not shown) and conveniently attached thereto. Afterwards, the fixing element 3 is fixed on the upper portion of the batteries so that, at the same time, it provides rigidity and stability to the battery pack and allows for the exchange of heat thanks to its openings. If other electrical devices have to be fixed, the support element 8 can be fixed above the fixing element 3, enabling an easy connection to the underlying batteries 2 and continuing to enable a good ventilation and, hence, heat exchange of the batteries 2.

Owing to the above, the advantages of a fixing system and a battery pack according to the invention are evident.

Thanks to the fixing system comprising one single fixing element, the batteries can firmly be fixed together.

In particular, the fixing element, for it consists of a flat wall, reduces the overall dimensions of the battery pack.

Furthermore, since the fixing element defines a plurality of openings, it allows air to flow between the batteries, thus enhancing the exchange of heat and, therefore, avoiding an overheating thereof.

Moreover, thanks to the plurality of openings and fixing points provided, the fixing element allows for the passage of the cables of the batteries and for the fixing of support elements for other electrical devices, if necessary.

In particular, the support element, which also consists of a flat wall with openings, makes it possible to fix electrical devices in a compact manner and facilitates the heat exchange thereof.

Finally, the fixing system and the battery pack according to the invention can clearly be subject to changes and variants, which, though, do not go beyond the scope of protection set forth in the appended claims.

For example, the shape of the cantilevered portions described herein as well as their distribution along the respective perimeters can be different.

In addition, the shape of the openings described herein or their number can vary, as well as the shape of the fixing element and of the support element, depending on the shape and type of battery pack.

## Claims

1. Fixing system (1) for a plurality of batteries (2) of a vehicle battery pack, said fixing system (1) comprising a fixing element (3) configured to connect said batteries (2) of said plurality of batteries (2) to each other, said fixing element (3) comprising a flat wall (3') defining anchoring points for said batteries (2)
wherein said fixing element (3) comprises a cantilevered portion (3") extending from said flat wall (3') on at least part of the perimeter thereof, wherein said fixing element (3) is manufactured as one single piece.

2. Fixing system according to claim 1, in which said flat wall (3') defines a plurality of openings (4, 5).

3. Fixing system according to claim 2, wherein said flat wall (3') defines first openings (4) comprising a first plurality of openings (4') and a second plurality of openings (4"), said first plurality of openings (4') having a different shape from said second plurality of openings (4").

4. Fixing system according to claim 2 or 3, wherein said flat wall (3') defines second openings (5) made near the edge of said flat wall (3').

5. Fixing system according to one of the preceding claims, further comprising at least one support element (8) configured to be fixed to said flat wall (3') and able to support an electric device.

6. Fixing system according to claim 5 when dependent on claim 3, wherein said support element (8) comprises a flat wall (8') defining at least one opening (11), said at least one opening (11) facing, in use, to one of said first and second plurality of openings (4', 4").

7. Fixing system according to claim 5 or 6, in which one of said flat wall (3') of said fixing element (3) and said flat part (8') of said support element (8) defines a protuberance (9) able to cooperate within a seat (6) made in the other between said flat wall (3') of said fastening element (3) and said flat part (8') of said support element (8) for allow the fixing of said support element (8) to said fixing element (3).

8. Battery pack for a vehicle comprising a casing defining a space insulated from the external environment and a plurality of batteries (2) carried by said casing, said battery pack comprising a fixing system (1) according to any one of the preceding claims connecting between them said plurality of batteries.

9. Battery pack according to claim 8, wherein said fastening system (1) is placed on an upper portion of said batteries (2) opposite to a lower portion cooperating with said casing.

10. Battery pack according to claim 8 or 9, wherein said fastening system (1) connects said batteries (2) and said batteries (2) to said casing.

## Patentansprüche

1. Befestigungssystem (1) für eine Mehrzahl von Batterien (2) eines Fahrzeugbatteriepacks, wobei das Befestigungssystem (1) ein Befestigungselement (3) umfasst, das dazu ausgebildet ist, die Batterien (2) der Mehrzahl von Batterien (2) miteinander zu verbinden, wobei das Befestigungselement (3) eine flache Wand (3') umfasst, die Verankerungspunkte für die Batterien (2) definiert,
wobei das Befestigungselement (3) einen auskragenden Abschnitt (3") umfasst, der sich von der flachen Wand (3') über zumindest einen Teil ihres Umfangs erstreckt, wobei das Befestigungselement (3) einstückig ausgebildet ist.

2. Befestigungssystem nach Anspruch 1, bei dem die flache Wand (3') eine Mehrzahl von Öffnungen (4, 5) definiert.

3. Befestigungssystem nach Anspruch 2, wobei die flache Wand (3') erste Öffnungen (4) definiert, die eine erste Mehrzahl von Öffnungen (4') und eine zweite Mehrzahl von Öffnungen (4") umfassen, wobei die erste Mehrzahl von Öffnungen (4') eine andere Form aufweist als die zweite Mehrzahl von Öffnungen (4‴).

4. Befestigungssystem nach Anspruch 2 oder 3, wobei die flache Wand (3') zweite Öffnungen (5) definiert, die nahe dem Rand der flachen Wand (3') ausgebildet sind.

5. Befestigungssystem nach einem der vorhergehenden Ansprüche, ferner umfassend mindestens ein Stützelement (8), das dazu eingerichtet ist, an der flachen Wand (3') befestigt zu werden und ein elektrisches Gerät tragen zu können.

6. Befestigungssystem nach Anspruch 5, wenn abhängig von Anspruch 3, wobei das Stützelement (8) eine flache Wand (8') umfasst, die mindestens eine Öffnung (11) definiert, wobei die mindestens eine Öffnung (11) im Gebrauch einer der genannten ersten und zweiten Mehrzahl von Öffnungen (4', 4") zugewandt ist.

7. Befestigungssystem nach Anspruch 5 oder 6, bei dem eine von der flachen Wand (3') des Befestigungselements (3) und dem flachen Teil (8') des Stützelements (8) einen Vorsprung (9) definiert, der in einem Sitz (6) zusammenwirken kann, der im jeweils anderen zwischen der flachen Wand (3') des Befestigungselements (3) und dem flachen Teil (8') des Stützelements (8) ausgebildet ist, um die Befestigung des genannten Stützelements (8) an dem Befestigungselement (3) zu ermöglichen.

8. Batteriepack für ein Fahrzeug, umfassend ein Gehäuse, das einen gegen die Außenumgebung isolierten Raum definiert, und eine Mehrzahl von Batterien (2), die von dem genannten Gehäuse getragen werden, wobei das Batteriepack ein Befestigungssystem (1) nach einem der vorhergehenden Ansprüche umfasst, dass die Mehrzahl von Batterien untereinander verbindet.

9. Batteriepack nach Anspruch 8, wobei das Befestigungssystem (1) an einem oberen Abschnitt der Batterien (2) angeordnet ist, gegenüber einem unteren Abschnitt, der mit dem Gehäuse zusammenwirkt.

10. Batteriepack nach Anspruch 8 oder 9, wobei das Befestigungssystem (1) die Batterien (2) miteinander verbindet und die Batterien (2) mit dem Gehäuse verbindet.

## Revendications

1. Système de fixation (1) pour une pluralité de batteries (2) d'un bloc-batterie de véhicule, ledit système de fixation (1) comprenant un élément de fixation (3) configuré pour relier lesdites batteries (2) de ladite pluralité de batteries (2) entre elles, ledit élément de fixation (3) comprenant une paroi plane (3') définissant des points d'ancrage pour lesdites batteries (2)
dans lequel ledit élément de fixation (3) comprend une partie en porte-à-faux (3") s'étendant à partir de ladite paroi plane (3') sur au moins une partie du périmètre de celle-ci, dans lequel ledit élément de fixation (3) est fabriqué en une seule pièce.

2. Système de fixation selon la revendication 1, dans lequel ladite paroi plane (3') définit une pluralité d'ouvertures (4, 5).

3. Système de fixation selon la revendication 2, dans lequel ladite paroi plane (3') définit des premières ouvertures (4) comprenant une première pluralité d'ouvertures (4') et une seconde pluralité d'ouvertures (4"), ladite première pluralité d'ouvertures (4') présentant une forme différente de celle de ladite seconde pluralité d'ouvertures (4'').

4. Système de fixation selon la revendication 2 ou 3, dans lequel ladite paroi plane (3') définit des secondes ouvertures (5) réalisées à proximité du bord de ladite paroi plane (3').

5. Système de fixation selon l'une des revendications précédentes, comprenant en outre au moins un élément de support (8) configuré pour être fixé à ladite paroi plane (3') et apte à supporter un dispositif électrique.

6. Système de fixation selon la revendication 5 lorsqu'elle dépend de la revendication 3, dans lequel ledit élément de support (8) comprend une paroi plane (8') définissant au moins une ouverture (11), ladite au moins une ouverture (11) faisant face, lors de l'utilisation, à l'une desdites première et seconde pluralités d'ouvertures (4', 4").

7. Système de fixation selon la revendication 5 ou 6, dans lequel l'une parmi ladite paroi plane (3') dudit élément de fixation (3) et ladite partie plane (8') dudit élément de support (8) définit une saillie (9) apte à coopérer avec un siège (6) réalisé dans l'autre parmi ladite paroi plane (3') dudit élément de fixation (3) et ladite partie plane (8') dudit élément de support (8), afin de permettre la fixation dudit élément de support (8) audit élément de fixation (3).

8. Bloc-batterie pour un véhicule comprenant un boîtier définissant un espace isolé de l'environnement extérieur et une pluralité de batteries (2) portées par ledit boîtier, ledit bloc-batterie comprenant un système de fixation (1) selon l'une quelconque des revendications précédentes reliant entre elles ladite pluralité de batteries.

9. Bloc-batterie selon la revendication 8, dans lequel ledit système de fixation (1) est placé sur une partie supérieure desdites batteries (2), opposée à une partie inférieure coopérant avec ledit boîtier.

10. Bloc-batterie selon la revendication 8 ou 9, dans lequel ledit système de fixation (1) relie lesdites batteries (2) et lesdites batteries (2) audit boîtier.
